# EUROPEAN PATENT APPLICATION

(11) **EP 2 966 470 A1**
(43) Date of publication of application: **13.01.2016**
(21) Application number: 15172809.4
(22) Date of filing: 18.06.2015
(51) Int. Cl.: G01S 13/78

(54) **FLEXIBLE INTEGRATED COMMUNICATIONS AND NAVIGATION TRANSCEIVER SYSTEM**

(30) Priority: 11.07.2014 US 201414329784
(71) Applicant: Honeywell International Inc., Morris Plains, NJ 07950 (US)
(72) Inventor: MALAGA, Alfonso, Morristown, NJ New Jersey 07962-2245 (US); ESPOSITO, Carl, Morristown, NJ New Jersey 07962-2245 (US); ANDERSON, Edward S., Morristown, NJ New Jersey 07962-2245 (US); BRANDAO, Ruy C., Morristown, NJ New Jersey 07962-2245 (US); MOYA, Adam, Morristown, NJ New Jersey 07962-2245 (US)
(74) Representative: Houghton, Mark Phillip

(57) **Abstract**

An integrated transceiver system for an avionics radio comprises a first transceiver comprising a first duplexer coupled with a first antenna, a first transmitter that sends an RF signal to the first duplexer, a first receiver that receives an RF signal from the first antenna through the first duplexer, and a first processor in communication with the first transmitter. The first transceiver is reconfigurable for ATG communications or DME navigation. A second transceiver comprises a second duplexer coupled with a second antenna, a second transmitter that sends an RF signal to the second duplexer, a second receiver that receives an RF signal from the second antenna through the second duplexer, and a second processor in communication with the second receiver. The second transceiver is reconfigurable for ATG communications, DME navigation, transponder signal communications, or satellite communications. The first and second transceivers are integrated into a line-replaceable unit of the radio.

## Description

### BACKGROUND

The Aeronautical Radio Navigation frequency band between 960 MHz and 1215 MHz, which was previously allocated exclusively for distance measuring equipment (DME) navigation (except for a few channels), has recently been re-allocated to also allow introduction of new Air-to-Ground (ATG) communications systems for aeronautical safety applications. This has been done in anticipation of the reduced need for spectrum for DME as the Global Positioning System (GPS) and Global Navigation Satellite Systems (GNSS) are becoming the primary mechanisms for navigation. Nevertheless, DME will still be used as a back-up for GPS/GNSS for the foreseeable future.

In order to facilitate the introduction of the new ATG communications systems and coexistence with DME, it is desirable to minimize changes to the aircraft, such as addition of new line-replaceable units, antennas, wiring, and the like.

### SUMMARY

An integrated transceiver system for an avionics radio comprises a first transceiver comprising a first duplexer in operative communication with a first antenna, a first transmitter configured to send an RF signal to the first duplexer for transmission by the first antenna, a first receiver configured to receive an RF signal from the first antenna through the first duplexer, and a first digital processor in operative communication with the first transmitter. The first transceiver is reconfigurable for air-to-ground (ATG) communications, or distance measuring equipment (DME) navigation. A second transceiver comprises a second duplexer in operative communication with a second antenna, a second transmitter configured to send an RF signal to the second duplexer for transmission by the second antenna, a second receiver configured to receive an RF signal from the second antenna through the second duplexer, and a second digital processor in operative communication with the second receiver. The second transceiver is reconfigurable for ATG communications, DME navigation, transponder signal communications, or satellite communications. The first transceiver and the second transceiver are integrated into a single line-replaceable unit of the avionics radio.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of an integrated transceiver system according to one embodiment;
Figure 2 is a block diagram illustrating further details of the transmitters and receivers employed in the transceiver system of Figure 1;
Figure 3 is a block diagram illustrating further details of a reconfigurable duplexer employed in the transceiver system of Figure 1;
Figure 4 is a block diagram of an integrated transceiver system according to another embodiment;
Figure 5 is a block diagram illustrating further details of the transmitters and receivers employed in the transceiver system of Figure 4;
Figure 6 is a block diagram illustrating an integrated transceiver system according to a further embodiment; and
Figure 7 is a block diagram illustrating further details of the transmitters and receivers employed in the transceiver system of Figure 6.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A flexible integrated transceiver system for an avionics radio is disclosed herein. The transceiver system is reconfigurable to support multiple different communications and navigation functions. The transceiver system is implemented such that no single failure results in loss of both navigation and communications functionality.

In one embodiment, the transceiver system includes a pair of transceivers that can be configured to operate as two different transceivers, one as an air-to-ground (ATG) communications transceiver and the other as a distance measuring equipment (DME) navigation transceiver. The transceivers each include a single antenna connection, but are capable of transmit/receive (duplex) operation on two different frequencies or the same frequency.

In another embodiment, the pair of transceivers is reconfigured to operate as a single ATG communications transceiver that employs dual antennas for dual transmit and dual receive operations. This configuration supports diversity transmit/receive operations, which can be employed to double the data throughput of ATG systems in a fixed channel assignment.

In a further embodiment, the pair of transceivers is reconfigured to operate as dual independent DME transceivers, each with its own antenna connection and power supply, to ensure that no single failure results in loss of both DME functions.

In other embodiments, the transceivers are reconfigurable such that one transceiver is used for ATG communications, and the other transceiver is used for transponder signal communications, satellite communications, or the like.

Further details of the present transceiver system are described hereafter with reference to the drawings.

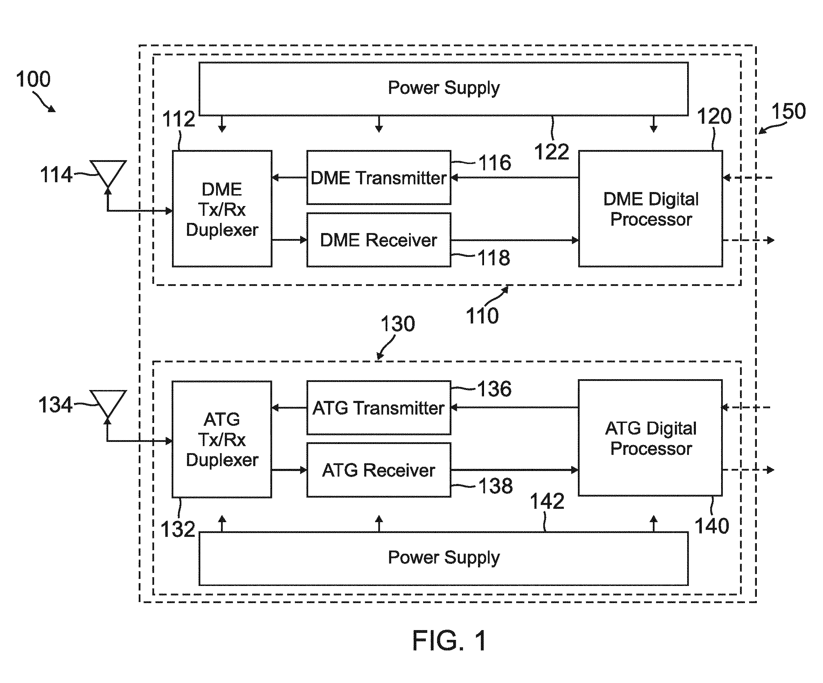

Figure 1 illustrates an integrated transceiver system 100 according to one embodiment, which is configured for ATG communications and DME navigation. The transceiver system 100 generally includes a first transceiver 110 configured for DME and a second transceiver 130 configured for ATG, which are integrated into a single line-replaceable unit (LRU) 150. In one embodiment, LRU 150 is configured to operate as two independent transceivers using transceiver 110 and transceiver 130. In addition, transceivers 110 and 130 are reconfigurable for duplex operation on two different frequencies or the same frequency.

The transceiver 110 includes a DME transmit/receive (Tx/Rx) duplexer 112 that is in operative communication with a DME antenna 114. A DME transmitter 116 is configured to transmit an RF signal to duplexer 112 for transmission by antenna 114. A DME receiver 118 is configured to receive an RF signal from antenna 114 through duplexer 112. A DME digital processor 120 is configured to send a digital signal to transmitter 116, and receive a digital signal from receiver 118. A first power supply 122 is operatively coupled to duplexer 112, transmitter 116, receiver 118, and digital processor 120.

The transceiver 130 includes an ATG Tx/Rx duplexer 132 that is in operative communication with an ATG antenna 134. An ATG transmitter 136 is configured to send an RF signal to duplexer 132 for transmission by antenna 134. An ATG receiver 138 is configured to receive a signal from antenna 134 through duplexer 132. An ATG digital processor 140 is configured to send a digital signal to transmitter 136, and receive a digital signal from receiver 138. A second power supply 142 is operatively coupled to duplexer 132, transmitter 136, receiver 138, and digital processor 140.

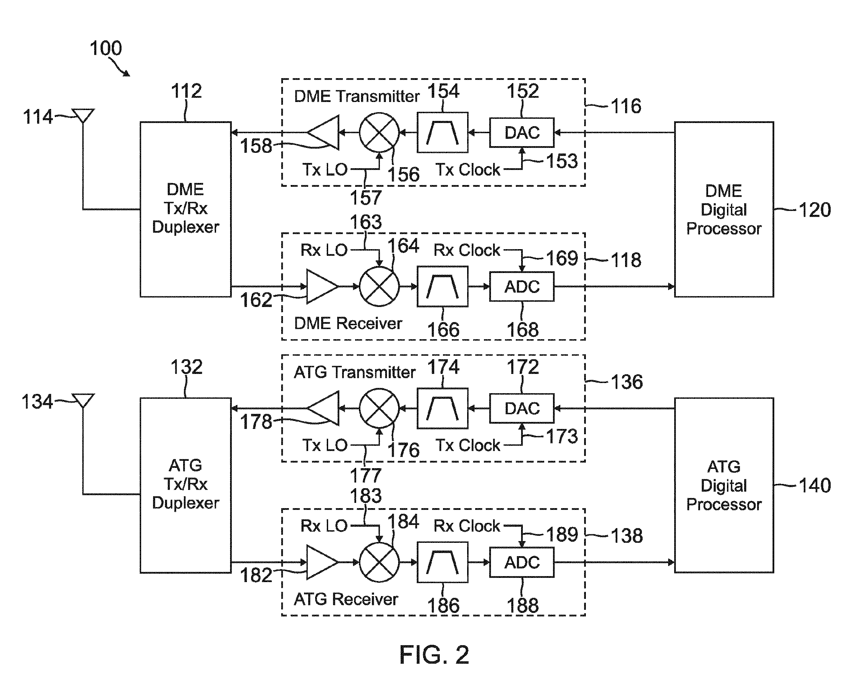

Figure 2 illustrates further details of the integrated transceiver configuration employed in transceiver system 100 according to one embodiment. The various transmitters, receivers, and digital processors of transceiver system 100 are configured to operate as two independent DME and ATG transceivers that each employ one antenna for transmit and receive. In addition, the transmitters and receivers are configured to use independent local oscillators and clocks.

As shown in Figure 2, DME transmitter 116 includes a digital to analog converter (DAC) 152 that receives a digital signal from DME digital processer 120 and a Tx clock signal 153. A bandpass filter 154 receives an analog signal from DAC 152 and passes a filtered signal to a mixer 156, which also receives a Tx local oscillator (LO) signal 157. An amplifier 158 receives a mixed signal from mixer 156 and outputs an amplified signal to DME Tx/Rx duplexer 112, which outputs a DME signal to antenna 114 for transmission.

The DME receiver 118 includes an amplifier 162 that receives an RF signal from antenna 114 through duplexer 112. A mixer 164 receives an amplified signal from amplifier 162 and an Rx LO signal 163. A bandpass filter 166 receives a mixed signal from mixer 164 and passes a filtered signal to an analog to digital converter (ADC) 168, which also receives an Rx clock signal 169. The ADC 168 outputs a digital signal to digital processor 120 for further processing.

The ATG transmitter 136 includes a DAC 172 that receives a digital signal from ATG digital processer 140 and a Tx clock signal 173. A bandpass filter 174 receives an analog signal from DAC 172 and passes a filtered signal to a mixer 176, which also receives a Tx LO signal 177. An amplifier 178 receives a mixed signal from mixer 176 and outputs an amplified signal to ATG Tx/Rx duplexer 132, which outuputs an ATG signal to antenna 134 for transmission.

The ATG receiver 138 includes an amplifier 182 that receives an RF signal from antenna 134 through duplexer 132. A mixer 184 receives an amplified signal from amplifier 182 and an Rx LO signal 183. A bandpass filter 186 receives a mixed signal from mixer 184 and passes a filtered signal to an ADC 188, which also receives an Rx clock signal 189. The ADC 188 outputs a digital signal to digital processor 140 for further processing.

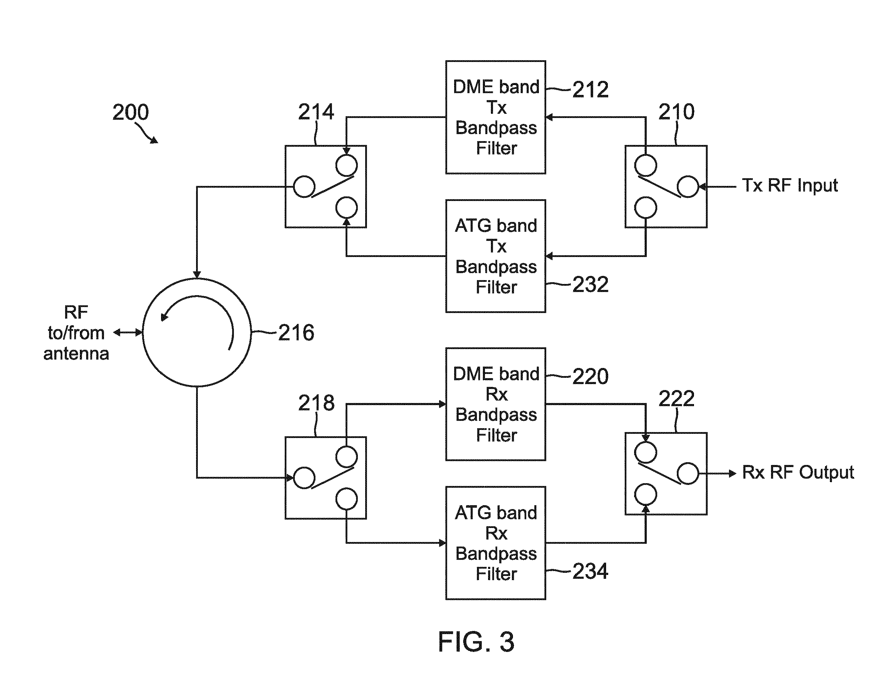

Figure 3 illustrates a reconfigurable DME/ATG Tx/Rx duplexer 200 that can be employed in transceiver system 100. In general, duplexer 200 can be configured to transmit and receive in the DME frequency bands, or reconfigured to transmit and receive in the ATG frequency bands, under digital processor control. For example, duplexer 200 can be configured to operate as DME Tx/Rx duplexer 112 in one configuration, and reconfigured to operate as ATG Tx/Rx duplexer 132 in another configuration (Figs. 1 and 2).

Figure 3 shows duplexer 200 configured to transmit and receive in the DME frequency bands, such as for DME Tx/Rx duplexer 112. In a transmit mode, a Tx RF input from a DME transmitter is sent to a first Tx band select switch 210, which is switchably connected to a Tx bandpass filter 212 for the DME band. The bandpass filter 212 receives the RF signal from band select switch 210 and passes a DME signal to a second Tx band select switch 214 switchably connected to bandpass filter 212. A circulator 216 receives the DME signal from band select switch 214 and directs the DME signal to an antenna for transmission.

In a receive mode for reception of a DME signal, circulator 216 receives an RF signal from the antenna, and sends the RF signal to a first Rx band select switch 218, which is switchably connected to an Rx bandpass filter 220 for the DME band. The bandpass filter 220 receives the RF signal from band select switch 218 and passes a DME signal to a second Rx band select switch 222 switchably connected to bandpass filter 220. The band select switch 222 then outputs the DME signal to a DME receiver.

As described previously, duplexer 200 can be reconfigured to transmit and receive in the ATG frequency bands, such as for ATG Tx/Rx duplexer 132. In this implementation of duplexer 200, during a transmit mode a Tx RF input from an ATG transmitter is sent to Tx band select switch 210, which is switched for connection with a Tx bandpass filter 232 for the ATG band. The bandpass filter 232 receives the RF signal from band select switch 210 and passes an ATG signal to band select switch 214, which is also switched for connection with bandpass filter 232. The circulator 216 receives the ATG signal from band select switch 214 and directs the ATG signal to the antenna for transmission.

In a receive mode for reception of an ATG signal, circulator 216 receives an RF signal from the antenna, and sends the RF signal to band select switch 218, which is switched for connection with an Rx bandpass filter 234 for the ATG band. The band select switch 222 is also switched for connection with bandpass filter 234. The bandpass filter 234 receives the RF signal from band select switch 218 and passes an ATG signal to band select switch 222, which outputs the ATG signal to an ATG receiver.

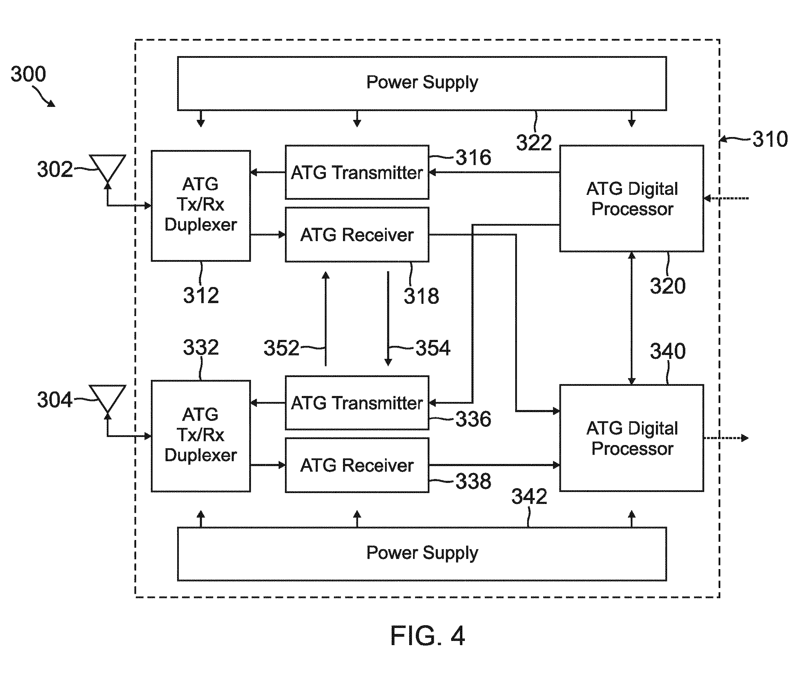

Figure 4 illustrates an integrated transceiver system 300 according to another embodiment, in which the pair of transceivers is reconfigured to operate as a dual diversity ATG communications transceiver. The transceiver system 300 generally includes a pair of ATG antennas 302, 304 for transmit and receive operations that are in communication with an LRU 310, which includes dual transmitters and dual receivers. The transceiver system 300 is reconfigurable to operate with the dual transmitters or the dual receivers to support diversity transmit/receive operations.

As shown in Figure 4, transceiver system 300 includes an ATG Tx/Rx duplexer 312 that is in operative communication with antenna 302. A first ATG transmitter 316 is configured to send a Tx RF signal to duplexer 312, and a first ATG receiver 318 is configured to receive an Rx RF signal from duplexer 312. A first ATG digital processor 320 receives an input digital signal and sends an output digital signal to transmitter 316 that is converted to the Tx RF signal. A first power supply 322 is operatively coupled to duplexer 312, transmitter 316, receiver 318 and digital processor 320.

A second ATG Tx/Rx duplexer 332 is in operative communication with antenna 304. A second ATG transmitter 336 is configured to transmit a Tx RF signal to duplexer 332, and a second ATG receiver 338 is configured to receive an Rx RF signal from duplexer 332. A second ATG digital processor 340 is configured to receive a digital signal output from receiver 338. A second power supply 342 is operatively coupled to duplexer 332, transmitter 336, receiver 338 and digital processor 340.

As shown in Figure 4, first ATG digital processor 320 is also configured to send an output digital signal to second ATG transmitter 336, and first ATG receiver 318 is configured to send an output digital signal to second ATG digital processor 340. The ATG digital processor 340 is configured to receive the digital signal from ATG receiver 318. In addition, digital processors 320 and 340 are in operative communication with each other. The transmitters and receivers in LRU 350 are also configured to use common local oscillators and clocks (indicated by arrows 352, 354).

When transceiver system 300 is configured for transmission of two different ATG signals, digital processor 320 outputs a first digital signal to transmitter 316 and a second digital signal to transmitter 336. The transmitter 316 outputs a first analog signal to duplexer 312, which outputs a first ATG signal to antenna 302 for transmission. The transmitter 336 outputs a second analog signal to duplexer 332, which outputs a second ATG signal to antenna 304 for transmission.

When transceiver system 300 is configured for reception of two different ATG signals, duplexer 312 receives a first RF signal from antenna 302, and duplexer 332 receives a second RF signal from antenna 304. The duplexer 312 outputs a first ATG signal to receiver 318, and duplexer 332 outputs a second ATG signal to receiver 338. The receiver 318 converts the first ATG signal to a first digital signal that is sent to digital processor 340, and receiver 338 converts the second ATG signal to a second digital signal that is also sent to digital processor 340.

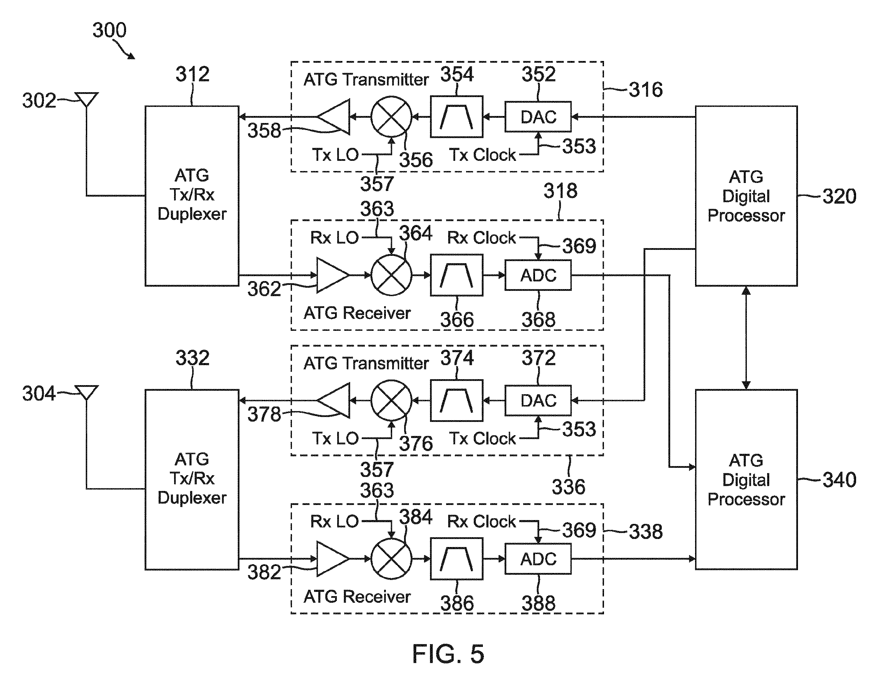

Figure 5 illustrates further details of the transmitters and receivers employed in transceiver system 300 according to one embodiment. The various transmitters, receivers, and digital processors of transceiver system 300 are configured for LRU operation as a single ATG transceiver that employs the antennas 302, 304 for transmit and/or receive functions.

As shown in Figure 5, the first ATG transmitter 316 includes a DAC 352, which receives the digital signal output from digital processer 320 and a Tx clock signal 353. A bandpass filter 354 receives an analog signal from DAC 352 and passes a filtered signal to a mixer 356, which also receives a Tx LO signal 357. An amplifier 358 receives a mixed signal from mixer 356 and outputs an amplified signal to ATG Tx/Rx duplexer 312, which outputs the first ATG signal to antenna 302 for transmission.

The first ATG receiver 318 includes an amplifier 362 that receives the RF signal from antenna 302 through duplexer 312. A mixer 364 receives an amplified signal from amplifier 362 and an Rx LO signal 363. A bandpass filter 366 receives a mixed signal from mixer 364 and passes a filtered signal to an ADC 368, which also receives an Rx clock signal 369. The ADC 368 outputs a digital signal to digital processor 340 for further processing.

The second ATG transmitter 336 includes a DAC 372 that receives the digital signal from digital processer 320 and Tx clock signal 353. A bandpass filter 374 receives an analog signal from DAC 372 and passes a filtered signal to a mixer 376, which also receives Tx LO signal 357. An amplifier 378 receives a mixed signal from mixer 376 and outputs an amplified signal to ATG Tx/Rx duplexer 332, which outputs an ATG signal to antenna 304 for transmission.

The second ATG receiver 338 includes an amplifier 382 that receives the RF signal from antenna 304 through duplexer 332. A mixer 384 receives an amplified signal from amplifier 382 and Rx LO signal 363. A bandpass filter 386 receives a mixed signal from mixer 384 and passes a filtered signal to an ADC 388, which also receives Rx clock signal 369. The ADC 388 outputs a digital signal to digital processor 340 for further processing.

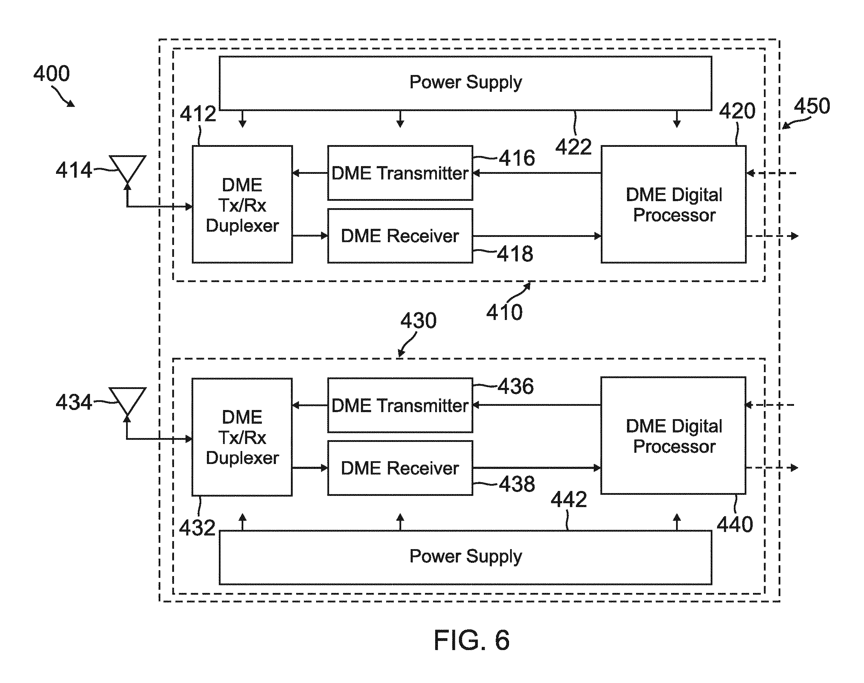

Figure 6 illustrates an integrated transceiver system 400 according to another embodiment, in which the pair of transceivers is reconfigured to operate as dual independent DME transceivers. The transceiver system 400 generally includes a first transceiver 410 and a second transceiver 430 integrated into a single LRU 450.

The first transceiver 410 includes a first DME Tx/Rx duplexer 412 that is in operative communication with a first DME antenna 414. A first DME transmitter 416 is configured to send an RF signal to duplexer 412 for transmission by antenna 414. A first DME receiver 418 is configured to receive an RF signal from antenna 414 through duplexer 412. A first DME digital processor 420 is configured to send a digital signal to transmitter 416, and receive a digital signal from receiver 418. A first power supply 422 is operatively coupled to duplexer 412, transmitter 416, receiver 418, and digital processor 420.

The second transceiver 430 includes a second DME Tx/Rx duplexer 432 that is in operative communication with a second DME antenna 434. A second DME transmitter 436 is configured to send an RF signal to duplexer 432 for transmission by antenna 434. A second DME receiver 438 is configured to receive an RF signal from antenna 434 through duplexer 432. A second DME digital processor 440 is configured to send a digital signal to transmitter 436, and receive a digital signal from receiver 438. A second power supply 442 is operatively coupled to duplexer 432, transmitter 436, receiver 438, and digital processor 440.

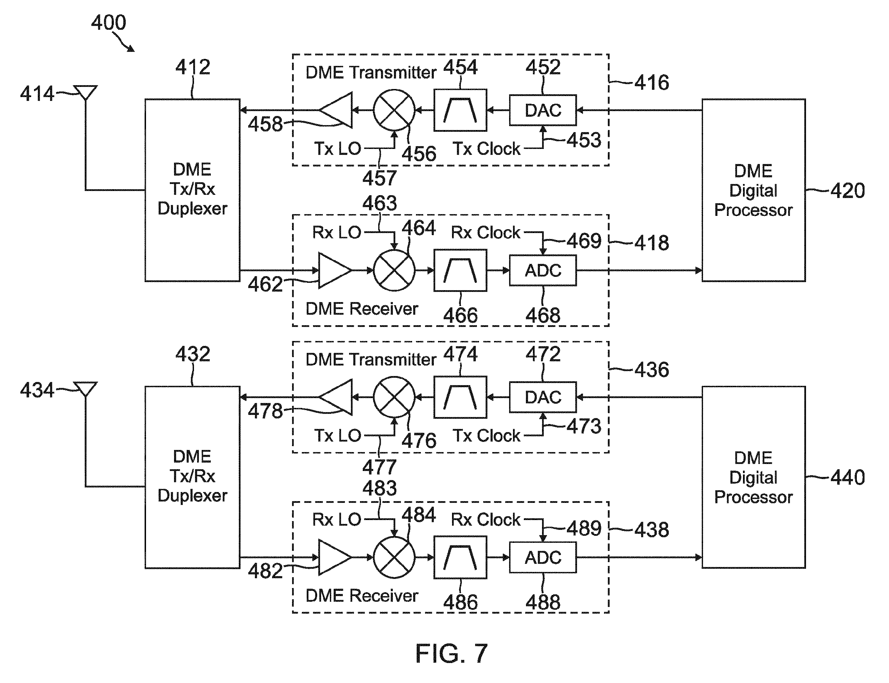

Figure 7 illustrates further details of the integrated transceiver configurations employed in dual DME transceiver system 400 according to one embodiment. The various transmitters, receivers, and digital processors of transceiver system 400 are configured to operate as two independent DME transceivers. In addition, the transmitters and receivers are configured to use independent local oscillators and clocks.

As shown in Figure 7, first DME transmitter 416 includes a DAC 452 that receives the digital signal from DME digital processer 420 and a Tx clock signal 453. A bandpass filter 454 receives an analog signal from DAC 452 and passes a filtered signal to a mixer 456, which also receives a Tx LO signal 457. An amplifier 458 receives a mixed signal from mixer 456 and outputs an amplified signal to first DME Tx/Rx duplexer 412, which outputs a first DME signal to antenna 414 for transmission.

The first DME receiver 418 includes an amplifier 462 that receives an RF signal from antenna 414 through duplexer 412. A mixer 464 receives an amplified signal from amplifier 462 and an Rx LO signal 463. A bandpass filter 466 receives a mixed signal from mixer 464 and passes a filtered signal to an ADC 468, which also receives an Rx clock signal 469. The ADC 468 outputs a digital signal to digital processor 420 for further processing.

The second DME transmitter 436 includes a DAC 472 that receives a digital signal from DME digital processer 440 and a Tx clock signal 473. A bandpass filter 474 receives an analog signal from DAC 472 and passes a filtered signal to a mixer 476, which also receives a Tx LO signal 477. An amplifier 478 receives a mixed signal from mixer 476 and outputs an amplified signal to second DME Tx/Rx duplexer 432, which outputs a second DME signal to antenna 434 for transmission.

The DME receiver 438 includes an amplifier 482 that receives an RF signal from antenna 434 through duplexer 432. A mixer 484 receives an amplified signal from amplifier 482 and an Rx LO signal 483. A bandpass filter 486 receives a mixed signal from mixer 484 and passes a filtered signal to an ADC 488, which also receives an Rx clock signal 489. The ADC 488 outputs a digital signal to digital processor 440.

In other embodiments, the integrated transceiver system can be implemented for other avionics communications and navigation operations. For example, one transceiver can be configured for ATG communications, and the other transceiver can be configured for transponder signal communications, such as mode s transponder communications. In another embodiment, the integrated transceiver system can be implemented such that one transceiver is configured for ATG communications, and the other transceiver is configured for satellite communications. These embodiments can be implemented with hardware similar to that shown in Figures 1-3 for integrated transceiver system 100, except that the DME functions of transceiver 110 are replaced by transponder functions or satellite communications functions using appropriate bandwidth filters. In addition, the reconfigurable duplexer shown in Figure 3 can have one or more additional bandpass filters implemented therein with the switching mechanisms, such as for mode s transponder signal bands, or satellite communication bands.

The integrated transceiver system can be implemented such the transceivers are reconfigurable automatically through control signals from the digital processors. The reconfiguration can be accomplished by using discrete hardware ground strapping, or via a bus interface to external device that provides configuration control commands.

In an exemplary embodiment, the transceiver system can integrate two L-band transceivers configured to operate in a bandwidth from about 960 MHz to about 1215 MHz.

A computer or processor used in the present systems and methods can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present method and system.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact disks, DVDs, Blu-ray discs, or other optical storage disks; volatile or non-volatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

### Example Embodiments

Example 1 includes an integrated transceiver system for an avionics radio, the transceiver system comprising: a first transceiver comprising a first duplexer in operative communication with a first antenna; a first transmitter configured to send an RF signal to the first duplexer for transmission by the first antenna; a first receiver configured to receive an RF signal from the first antenna through the first duplexer; and a first digital processor in operative communication with the first transmitter. The first transceiver is reconfigurable for ATG communications, or (DME) navigation. A second transceiver comprises a second duplexer in operative communication with a second antenna; a second transmitter configured to send an RF signal to the second duplexer for transmission by the second antenna; a second receiver configured to receive an RF signal from the second antenna through the second duplexer; and a second digital processor in operative communication with the second receiver. The second transceiver is reconfigurable for ATG communications, DME navigation, transponder signal communications, or satellite communications. The first transceiver and the second transceiver are integrated into a single line-replaceable unit of the avionics radio.
Example 2 includes the transceiver system of Example 1, wherein the first transceiver is configured for DME navigation, and the second transceiver is configured for ATG communications.
Example 3 includes the transceiver system of Example 2, wherein the first transceiver and the second transceiver are configured to operate in a bandwidth from about 960 MHz to about 1215 MHz.
Example 4 includes the transceiver system of any of Examples 2-3, wherein the first digital processor is configured to send a digital signal to the first transmitter, and receive a digital signal from the first receiver.
Example 5 includes the transceiver system of Example 4, wherein the second digital processor is configured to send a digital signal to the second transmitter, and receive a digital signal from the second receiver.
Example 6 includes the transceiver system of any of Examples 2-5, wherein the first duplexer is configured to transmit and receive in a DME frequency band, and the second duplexer is configured to transmit and receive in an ATG frequency band.
Example 7 includes the transceiver system of Example 1, wherein the first transceiver is configured for ATG communications, and the second transceiver is configured for ATG communications.
Example 8 includes the transceiver system of Example 7, wherein the first digital processor is configured to send digital signals to the first transmitter and the second transmitter.
Example 9 includes the transceiver system of Example 8, wherein the second digital processor is configured to receive digital signals from the first receiver and the second receiver.
Example 10 includes the transceiver system of Example 9, wherein the first and second digital processors are in operative communication with each other.
Example 11 includes the transceiver system of any of Examples 7-10, wherein the first duplexer is configured to transmit and receive in an ATG frequency band, and the second duplexer is configured to transmit and receive in an ATG frequency band.
Example 12 includes the transceiver system of Example 1, wherein the first transceiver is configured for DME navigation, and the second transceiver is configured for DME navigation.
Example 13 includes the transceiver system of Example 12, wherein the first digital processor is configured to send a digital signal to the first transmitter, and receive a digital signal from the first receiver.
Example 14 includes the transceiver system of Example 13, wherein the second digital processor is configured to send a digital signal to the second transmitter, and receive a digital signal from the second receiver.
Example 15 includes the transceiver system of any of Examples 12-14, wherein the first duplexer is configured to transmit and receive in a DME frequency band, and the second duplexer is configured to transmit and receive in a DME frequency band.
Example 16 includes the transceiver system of Example 1, wherein the first transceiver is configured for ATG communications, and the second transceiver is configured for transponder signal communications.
Example 17 includes the transceiver system of Example 1, wherein the first transceiver is configured for ATG communications, and the second transceiver is configured for satellite communications.
Example 18 includes the transceiver system of Example 1, wherein the first and second transceivers are reconfigurable for duplex operation on two different frequencies or the same frequency.
Example 19 includes the transceiver system of any of Examples 1-18, wherein the first and second duplexers each comprise: a first transmit band select switch configured to receive a transmit RF signal; a plurality of transmit bandpass filters switchably connected to the first transmit band select switch and configured to pass a filtered transmit band of the transmit RF signal; a second transmit band select switch switchably connected to the transmit bandpass filters and configured to receive the filtered transmit band from one of the transmit bandpass filters; a circulator coupled to the second transmit band select switch, the circulator configured to receive the filtered transmit band from the second transmit band select switch and direct the filtered transmit band to the antenna for transmission; a first receive band select switch coupled to the circulator and configured to receive an antenna RF signal from the circulator; a plurality of receive bandpass filters switchably connected to the first receive band select switch and configured to pass a filtered receive band of the antenna RF signal; and a second receive band select switch switchably connected to the receive bandpass filters, the second receive band select switch configured to receive the filtered receive band from one of the receive bandpass filters and output the filtered receive band.
Example 20 includes the transceiver system of any of Examples 1-19, wherein the first and second transceivers are reconfigurable automatically through control signals from the first and second digital processors.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. An integrated transceiver system for an avionics radio, the transceiver system comprising:
a first transceiver comprising:
a first duplexer in operative communication with a first antenna;
a first transmitter configured to send a radio frequency (RF) signal to the first duplexer for transmission by the first antenna;
a first receiver configured to receive an RF signal from the first antenna through the first duplexer; and
a first digital processor in operative communication with the first transmitter;
wherein the first transceiver is reconfigurable for air-to-ground (ATG) communications, or distance measuring equipment (DME) navigation; and
a second transceiver comprising:
a second duplexer in operative communication with a second antenna;
a second transmitter configured to send an RF signal to the second duplexer for transmission by the second antenna;
a second receiver configured to receive an RF signal from the second antenna through the second duplexer; and
a second digital processor in operative communication with the second receiver;
wherein the second transceiver is reconfigurable for ATG communications, DME navigation, transponder signal communications, or satellite communications;
wherein the first transceiver and the second transceiver are integrated into a single line-replaceable unit of the avionics radio.

2. The transceiver system of claim 1, wherein when the first transceiver is configured for DME navigation, and the second transceiver is configured for ATG communications:
the first digital processor is configured to send a digital signal to the first transmitter and receive a digital signal from the first receiver;
the second digital processor is configured to send a digital signal to the second transmitter and receive a digital signal from the second receiver;
the first duplexer is configured to transmit and receive in a DME frequency band; and
the second duplexer is configured to transmit and receive in an ATG frequency band.

3. The transceiver system of claim 1, wherein when the first transceiver is configured for ATG communications, and the second transceiver is configured for ATG communications:
the first digital processor is configured to send digital signals to the first transmitter and the second transmitter;
the second digital processor is configured to receive digital signals from the first receiver and the second receiver;
the first and second digital processors are in operative communication with each other;
the first duplexer is configured to transmit and receive in an ATG frequency band;
and
the second duplexer is configured to transmit and receive in an ATG frequency band.

4. The transceiver system of claim 1, wherein when the first transceiver is configured for DME navigation and the second transceiver is configured for DME navigation:
the first digital processor is configured to send a digital signal to the first transmitter and receive a digital signal from the first receiver;
the second digital processor is configured to send a digital signal to the second transmitter and receive a digital signal from the second receiver;
the first duplexer is configured to transmit and receive in a DME frequency band;
and
the second duplexer is configured to transmit and receive in a DME frequency band.

5. The transceiver system of claim 1, wherein the first transceiver is configured for ATG communications, and the second transceiver is configured for transponder signal communications.

6. The transceiver system of claim 1, wherein the first transceiver is configured for ATG communications, and the second transceiver is configured for satellite communications.

7. The transceiver system of claim 1, wherein the first and second transceivers are reconfigurable for duplex operation on two different frequencies or the same frequency.

8. The transceiver system of claim 1, wherein the first and second transceivers are reconfigurable automatically through control signals from the first and second digital processors.

9. The transceiver system of claim 1, wherein the first and second duplexers each comprise:
a first transmit band select switch configured to receive a transmit RF signal;
a plurality of transmit bandpass filters switchably connected to the first transmit band select switch and configured to pass a filtered transmit band of the transmit RF signal;
a second transmit band select switch switchably connected to the transmit bandpass filters and configured to receive the filtered transmit band from one of the transmit bandpass filters;
a circulator coupled to the second transmit band select switch, the circulator configured to receive the filtered transmit band from the second transmit band select switch and direct the filtered transmit band to the antenna for transmission;
a first receive band select switch coupled to the circulator and configured to receive an antenna RF signal from the circulator;
a plurality of receive bandpass filters switchably connected to the first receive band select switch and configured to pass a filtered receive band of the antenna RF signal; and
a second receive band select switch switchably connected to the receive bandpass filters, the second receive band select switch configured to receive the filtered receive band from one of the receive bandpass filters and output the filtered receive band.

10. The transceiver system of claim 1, wherein the first transceiver and the second transceiver are configured to operate in a bandwidth from about 960 MHz to about 1215 MHz.
